# DEMANDE DE BREVET EUROPEEN

(11) **EP 1 004 964 A1**
(43) Date de publication de la demande: **31.05.2000**
(21) Numéro de dépôt: 99402940.3
(22) Date de dépôt: 26.11.1999
(51) Int. Cl.: G06F 11/34

(54) **Dispositif et procédé d'optimisation de surveillance de seuils**

(30) Priorité: 27.11.1998 FR 9814936
(71) Demandeur: BULL S.A., 78434 Louveciennes Cedex (FR)
(72) Inventeur: Bonnin, Alain, 95150 Taverny (FR)

(57) **Abrégé**

La présente invention concerne un dispositif et un procédé d'optimisation de surveillance de seuils. Le dispositif selon l'invention permettant de surveiller l'activité d'au moins un ordinateur distant (OD1, ODn) comprend un agent de performance (2i), à partir d'un gestionnaire SNMP (1) installé sur un ordinateur local (OL) à travers un réseau (10), ledit agent de performance (2i) pouvant détecter le dépassement d'un seuil de consommation d'une ou plusieurs ressources de l'ordinateur distant (OD) à partir d'une fonction de seuil (8i) qui permet de paramétrer l'agent de performance en lui indiquant les seuils déterminés pour chaque activité surveillée, et émettre une notification vers le gestionnaire SNMP (1) de l'ordinateur local (OL) suite au dépassement d'un seuil. L'agent de performance (2i) exécute au moins un diagnostic lorsqu'un seuil a été dépassé en appelant une fonction de diagnostic (5i) interne à l'agent SNMP de performance (2i) et émet une notification comprenant l'information de diagnostic donnant des informations précises sur les origines de la consommation des ressources surveillées au moindre coût.

## Description

La présente invention concerne un dispositif et un procédé d'optimisation de surveillance de seuils.

La présente invention concerne plus particulièrement un dispositif et un procédé permettant de surveiller l'activité d'au moins un ordinateur distant comprenant un agent de performance, à partir d'un gestionnaire SNMP installé sur un ordinateur local, à travers un réseau.

Il existe aujourd'hui un réseau mondial d'ordinateurs qui se nomme Internet. Le réseau Internet repose sur une famille de protocoles nommée "TCP/IP". Pour administrer un ordinateur sur le réseau Internet à partir d'un autre ordinateur, on utilise le protocole SNMP (Simple Network Management Protocol) de la famille des protocoles TCP/IP. C'est, en informatique, un protocole d'administration standardisé par des documents appelés "RFC" (Request For Comments). Lorsque le réseau fonctionne en mode non connecté, le protocole est de type UDP/IP. Le protocole SNMP permet à un ordinateur ci-après dénommé "l'ordinateur local" (OL), comportant un logiciel de gestionnaire SNMP, ci après appelé "le gestionnaire SNMP", de communiquer, par un protocole réseau de type SNMP/UDP/IP, avec un autre ordinateur, ci après appelé "l'ordinateur distant" (OD), comportant un logiciel d'agent SNMP, ci dessous appelé l'agent SNMP. Pour s'adresser sur un réseau à un agent SNMP, à partir du gestionnaire SNMP, on utilise un port UDP et une adresse IP. Un agent est un programme actif ou processus qui fournit un service. Ce processus peut se décomposer en plusieurs unités d'exécution appelée également "thread".

Il existe de nombreux agents SNMP, sur les ordinateurs, sur les routeurs, etc. Le dialogue SNMP de ces agents est constitué de commandes et d'un message rudimentaires, respectivement "GET", "GET NEXT", "SET" et "TRAP". C'est pour cette raison que le protocole est qualifié de simple. Les commandes "GET", "GET NEXT" et "SET" sont des requêtes émises par le gestionnaire SNMP. Les messages d'alarme (TRAP) sont des événements émis par l'agent SNMP de l'ordinateur distant (OD) et non sollicités par le gestionnaire SNMP de l'ordinateur local (OL).

Les objets SNMP sont ordonnés par leurs identificateurs (OID). Les ordinateurs étant de plus en plus puissants, le nombre des objets, imprimantes ou fichiers par exemple, gérés par les agents est de plus en plus grand. Le protocole UDP n'est pas sécurisé. Une trame UDP peut se perdre sur le réseau sans que l'émetteur en soit averti. Le gestionnaire SNMP doit en cas de non-réponse, refaire sa requête après un délai d'attente.

Un agent SNMP gère une MIB (Management Information Base - base d'information managée) SNMP qui se décompose en objets SNMP organisés sous forme arborescente. Par exemple, il peut gérer un objet SNMP global et unique comme le pourcentage de consommation globale du ou des processeurs de l'ordinateur ou bien des objets SNMP multiples comme le pourcentage de consommation de CPU d'une application, ce qui entraîne qu'il y a autant d'instances gérées par l'agent SNMP de ce type d'objet SNMP qu'il y a d'applications sur l'ordinateur. Dans ce dernier cas, l'objet est dit multi-instancié et est représenté par une « table SNMP ». L'agent SNMP qui gère la consommation des ressources sur un ordinateur est appelé ci-après "l'agent SNMP de performance".

Pour surveiller l'activité d'un ordinateur à partir d'un gestionnaire SNMP d'un ordinateur local, à travers un réseau, une solution consiste à fabriquer un agent SNMP de performance dans l'ordinateur distant. Le gestionnaire SNMP émet ensuite des requêtes SNMP "CET" et "GET NEXT" vers cet agent distant SNMP de performance pour obtenir périodiquement par exemple la liste des programmes actifs et leur pourcentage de consommation de ressources. Cette solution est très coûteuse en argent car les requêtes réseau sont facturées à la quantité ou au temps d'utilisation du réseau. Cette solution est également très coûteuse en charge car elle entraîne de nombreuses requêtes réseau, surtout si ces dernières sont à destination d'un ordinateur lui-même très chargé.

Le but de l'invention est d'optimiser, à partir d'un gestionnaire SNMP, la surveillance à travers un réseau, de l'activité d'un ordinateur distant, par un agent SNMP et de proposer un dispositif qui permette à une personne chargée de la surveillance d'un réseau d'ordinateurs d'être prévenue lorsque l'utilisation des ressources d'un ordinateur dépasse un certain seuil et de connaître quels sont les programmes actifs sur cet ordinateur qui ont entraîné ce dépassement de seuil tout en augmentant le moins possible la consommation des ressources de cet ordinateur.

Ce but est atteint par le fait que le dispositif permettant de surveiller l'activité d'au moins un ordinateur distant, à partir d'un gestionnaire SNMP installé sur un ordinateur local à travers un réseau, se caractérise en ce qu'il comprend un agent de performance installé dans chaque ordinateur distant pouvant détecter le dépassement d'un seuil de consommation d'une ou plusieurs ressources de l'ordinateur distant à partir d'une fonction de seuil, gérable par le gestionnaire SNMP de l'ordinateur local, fonction qui permet de paramétrer l'agent de performance en lui indiquant des seuils déterminés pour chaque activité surveillée, et émettre une notification de dépassement de seuil, et en ce que l'agent de performance exécute au moins un diagnostic de seuil lorsqu'un seuil a été dépassé en appelant une fonction de diagnostic interne à l'agent SNMP de performance, fonction gérable par le gestionnaire SNMP de l'ordinateur local, et émet une notification de diagnostic comprenant une information de diagnostic.

Selon une autre particularité, les paramètres de la fonction interne de seuil et de diagnostic sont des indexes indirects d'accès à une table respectivement de seuil et de diagnostic de l'agent de performance.

Selon une autre particularité, la table de seuil est constituée des objets suivants : un identificateur, une formule, une période, un type de comparaison, une valeur à comparer (seuil), un nombre d'occurrence avant alerte, une sévérité, un nombre d'alarmes possibles, une fonction interne de diagnostic à appeler en cas de dépassement de seuil, une date, une valeur de fin d'alerte, une période d'activation.

Selon une autre particularité, la table de diagnostic est constituée des objets suivants : un identificateur, une formule, une période, un type de comparaison, une valeur à comparer, une sévérité, une date.

Selon une autre particularité, la table de seuil et la table de diagnostic comportent un objet définissant la destination de la notification de dépassement de seuil et un objet définissant la destination de la notification de diagnostic.

Selon une autre particularité, la notification est constituée d'un message d'alarme (TRAP) ou d'une écriture dans un historique de son propre programme ou dans un historique global du système.

Selon une autre particularité, chaque activité surveillée est effectuée par une unité d'exécution qui déclenche une autre unité d'exécution pour chaque diagnostic.

Selon une autre particularité, la fonction de diagnostic (5i) comporte quatre paramètres, permettant de déclencher respectivement le calcul de la consommation globale en processeur, de la mémoire physique, de la mémoire du cache, du réseau, un cinquième paramètre permettant de déclencher la recherche de tous les programmes qui utilisent plus d'un pourcentage paramétrable du ou des processeurs, un sixième paramètre permettant de déclencher le calcul ces consommations sur un délai paramétrable en millisecondes, et un septième paramètre permettant de déclencher la recherche de tous les programmes qui utilisent plus d'un nombre paramétrable de kilo octets de mémoire physique.

Un autre but de l'invention est de proposer un procédé d'optimisation de surveillance de seuils de consommation paramétrables sur un ordinateur distant.

Ce but est atteint par le fait que le procédé comporte les étapes suivantes :
- une étape de surveillance d'un seuil par une fonction interne de seuil;
- une étape d'émission, par l'ordinateur distant sur lequel l'agent de performance effectue la surveillance, d'une notification de dépassement de seuil;
- une étape d'exécution de diagnostics par une fonction de diagnostic interne ;
- une étape d'émission d'une notification de diagnostic contenant le diagnostic associé au dépassement de seuil.

Selon une autre particularité, l'étape de surveillance de seuil comporte trois tâches, une première d'analyse d'une formule de la fonction de seuil, une deuxième d'obtention à un temps donné des valeurs des compteurs d'une première structure interne et une troisième d'exécution d'une boucle infinie de surveillance.

Selon une autre particularité, la boucle infinie de surveillance comprend une première partie consistant à attendre sur une période et à obtenir au bout de la période les valeurs des compteurs d'une seconde structure, une deuxième partie consistant à tester à l'aide des deux structures internes si un seuil de la fonction de seuil a été atteint et si le nombre d'occurrences est atteint, et une troisième partie consistant à remplacer les valeurs des compteurs de la première structure interne par ceux de la seconde.

Selon une autre particularité, l'exécution d'un diagnostic comporte l'analyse de la formule en préparant les valeurs des compteurs de diagnostic de deux structures internes, la recherche du nombre d'occurrence des compteurs de diagnostic et l'exécution une boucle de surveillance pour chaque occurrence.

Selon une autre particularité, la boucle comprend une première partie consistant à trouver, à un temps donné, la valeur des compteurs de la première structure interne, afin d'initialiser le diagnostic, une deuxième partie consistant à attendre sur sa périodicité, puis à obtenir sur ce nouveau temps donné les valeurs des compteurs de surveillance de la seconde structure interne et une troisième partie consistant à tester à l'aide des deux structures si le seuil a été atteint.

D'autres particularités et avantages de la présente invention apparaîtront plus clairement à la lecture de la description ci-après faite en référence aux figures annexées suivantes :
- la figure 1 représente une vue schématique d'un système de surveillance à partir d'un gestionnaire SNMP de l'activité d'un ordinateur par un agent SNMP de performance ;
- les figures 2 et 3 représentent respectivement une table de seuil et une table de diagnostic ;
- les figures 4 et 5 représentent une structure interne d'une unité d'exécution respectivement d'une surveillance de seuil et d'un diagnostic de seuil.

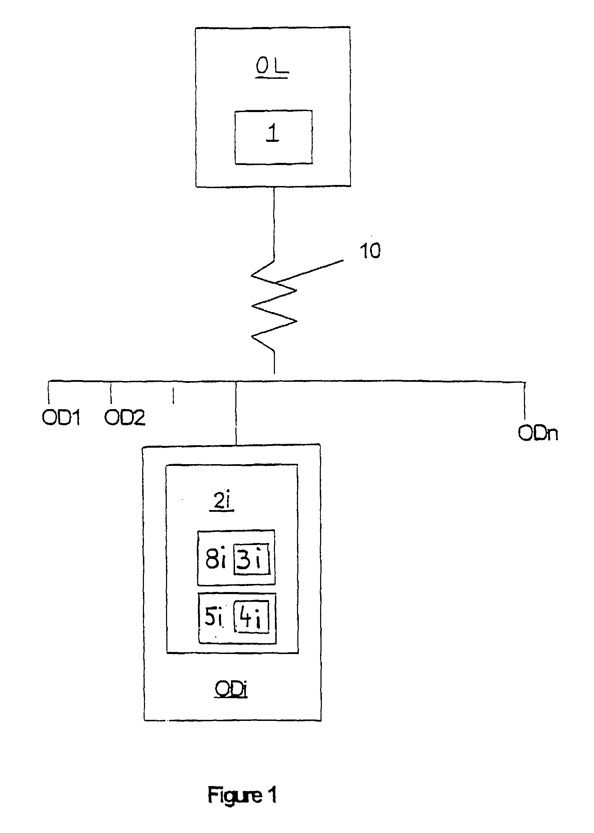

En référence à la figure 1, un ordinateur local (OL) est équipé d'un logiciel gestionnaire SNMP (1) et est connecté à un réseau (10), par exemple Internet, et à travers ce réseau (10), à des ordinateurs distants (OD1, OD2, ..., ODi, ..., ODn). Chaque ordinateur distant (ODi) gère des applications et comporte un agent SNMP de performance (2i). Cet agent de performance est un programme actif ou processus qui surveille la consommation globale des ressources de l'ordinateur distant (ODi). Chaque machine administrée comporte un agent de performance (2i) muni d'une fonction (8i) de seuil permettant de surveiller des paramètres tels que l'activité CPU, l'activité machine, les programmes actifs, les disques, l'activité mémoire, et l'activité des protocoles sur le réseau. La fonction de seuil (8i) peut être paramétrée en lui indiquant de surveiller des seuils et de manière avantageuse des seuils globaux portant sur plusieurs ressources. Des seuils globaux sont déterminés pour chacune des activités surveillées. L'agent de performance (2i) comporte une première table de paramétrage de seuil appelée "table de seuil" ou "table d'alarme" (3i) dans laquelle sont stockés des seuils associés à des combinaisons d'attributs et de formules. Les combinaisons de seuils, d'attributs et de formules constituent des requêtes de surveillance. Chaque argument de la fonction de seuil correspond à une requête de surveillance. Les seuils, formules et attributs consistent en des objets SNMP. L'agent de performance crée une unité d'exécution par requête de surveillance, et plus précisément par point d'entrée de la table de seuil. Si la consommation d'une activité surveillée dépasse un seuil de la table de seuil soit sur dépassement d'une consommation globale de toutes les ressources de l'ordinateur, soit sur dépassement d'une consommation d'une ou plusieurs ressources, soit par n'importe quelle requête de surveillance de dépassement de seuil, ou encore si une période de vérification est atteinte, l'agent de performance émet une notification qui est constituée soit d'un message d'alarme (TRAP) vers le gestionnaire SNMP (1), soit d'une écriture dans un historique de son propre programme ou dans un historique global du système.

Lorsqu'une notification est émise, l'agent de performance appelle une fonction interne de diagnostic (5i) associée à ladite notification. La fonction interne de diagnostic est destinée à diagnostiquer le dépassement de seuil, à savoir rechercher l'origine du dépassement, effectuer un traitement en conséquence et/ou surveiller la ressource l'ayant occasionné. Cette fonction est configurable avec des paramètres. L'agent de performance (2i) comporte une deuxième table de paramétrage de diagnostic (4i) appelée "table de diagnostic". Chaque argument de la fonction de diagnostic correspond à un point d'entrée de la table de diagnostic, et donc à une requête de diagnostic. L'agent de performance crée une unité d'exécution par point d'entrée de la table de diagnostic. Une seconde forme de réalisation consiste à utiliser des fonctions internes de seuil (8i) et de diagnostic (5i) avec des arguments prédéfinis sans passer par des tables. Dans la première forme de réalisation, les types de diagnostic sont susceptibles d'être enrichis en créant de nouvelles requêtes de diagnostic

C'est l'agent de performance lui-même qui envoie la consommation en ressources de chaque programme actif par un message d'alarme (TRAP) au gestionnaire SNMP. Cette solution est paramétrable. Cette solution n'entraîne aucun coût, car elle ne nécessite pas de requêtes réseau, ni d'appel à un programme externe. Le seul coût est celui généré par l'appel à une fonction interne d'un programme qui est actif.

Une description détaillée d'un agent SNMP de performance conforme à l'invention, va à présent être effectuée. Cet agent SNMP de performance permet d'émettre une notification (message d'alarme ou écriture dans un historique) quand un seuil, associé à une combinaison d'attributs de performance et de formules dite requête de surveillance, est atteint, ou quand une période de vérification est atteinte même s'il n'y a pas de dépassement de seuil.

Les formules et attributs sont stockés dans des objets SNMP, et constituent une table "ntP100Alarm" appelée "table d'alarme" ou " table de seuil" (3i). Une formule et son seuil associé peuvent être modifiés. Pour configurer les seuils, l'agent de performance lance une unité d'exécution ou "thread" du programme actif, en utilisant les objets de la table de seuil (3i) définie ci-après. Tous les attributs des objets de la table de seuil sont de type "chaîne de caractères SNMP" et possèdent une valeur par défaut. Tous les attributs sont optionnels. Il n'existe pas d'attributs obligatoires. La table de seuil "ntP100Alarm" (3i) de l'agent de performance ntPerformance comporte les objets suivant :

Un objet 'ntP100AlarmFormula' définit une formule, dont la valeur par défaut est la chaîne :
"100 - (DELTA (ntP01TotalProcessorTime) / (DELTA (ntP01 CaptureTime) * 100000))"

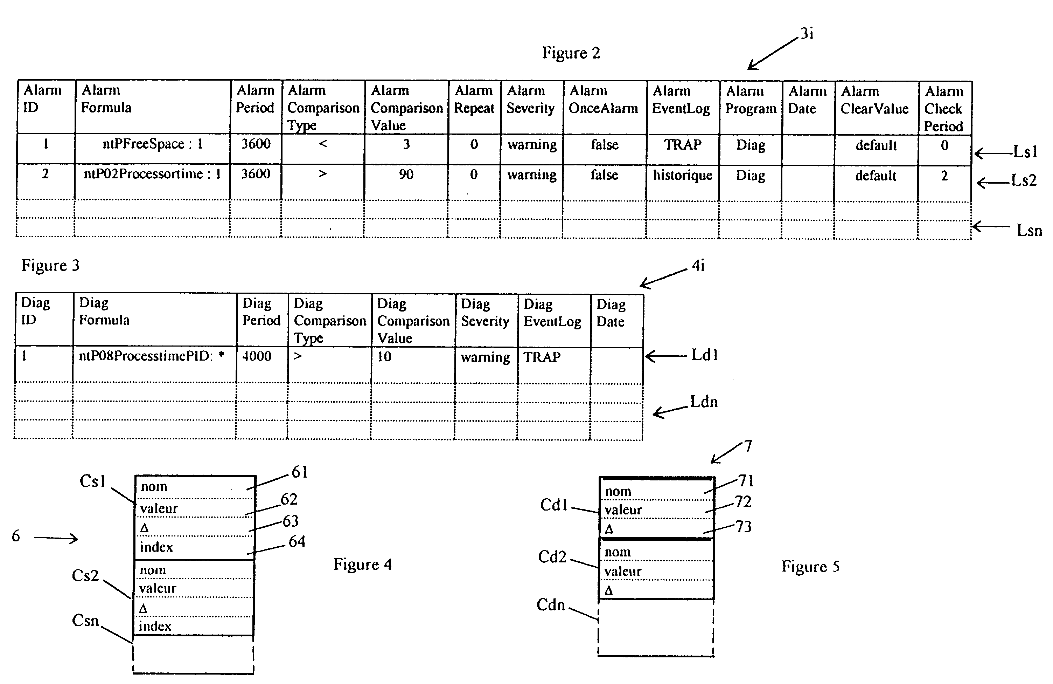

Cette chaîne représente, par exemple, l'activité CPU globale en pourcentage. L'attribut "ntP01TotalProcessorTime" représente un premier compteur 64 bits incrémental, avec une précision de 100 nanosecondes. L'attribut "ntP01CaptureTime" représente un compteur de temps absolu avec une précision de 1 milliseconde. '100000' est la différence de précision entre ces deux compteurs. La formule peut par exemple contenir des entiers, "+" pour additionner, '-' pour soustraire, "*" pour multiplier, "/" pour diviser, "(" et ")" pour donner la priorité, des compteurs "ntP..." disponibles dans la MIB "ntPerformance" de l'ordinateur distant. L'opération "DELTA( )" calcule la différence entre deux valeurs successives d'un même compteur "ntP". L'attribut ";" après un objet 'ntP' et suivi d'un entier indique l'occurrence du compteur "ntp". A titre d'exemple (figure 2), "ntP06FreeSpace:1" représente le premier disque logique, qui est généralement "C:".

Un objet "ntP100AlarmComparisonValue" représente la valeur du seuil. Sa valeur par défaut est 90. La formule est régulièrement calculée par l'agent de performance. Lorsque la formule, représentant l'activité CPU, par exemple, devient supérieure au seuil, par exemple 90%, l'agent peut émettre une notification constituée soit par un message d'alarme "TRAP" soit par une écriture dans un historique.

Un objet "ntP100AlarmID" est un index pour la table de seuil permettant d'identifier chaque requête de surveillance constituant ladite table. Des exemples de surveillance de seuils d'une table de seuil sont définis en annexe 1. Cet objet ntP100AlarmID peut être utilisé pour entrer ou détruire un seuil.

Un objet "ntP100AlarmPeriod" définit la période de surveillance en seconde. Sa valeur par défaut est 3600 (une heure). Par exemple l'activité CPU sera calculée périodiquement, selon cet intervalle spécifié. Si cette activité, en une heure, est supérieure à 90%, une notification est émise.

Un objet "ntP100AlarmComparisonType" spécifie le type de comparaison, si la valeur effective doit être supérieure (>) ou inférieure (<) à la valeur du seuil pour émettre une notification. Par défaut, c'est la valeur supérieure (>) qui est par exemple choisie.

Un objet "ntP100AlarmRepeat" est un entier qui représente le nombre de fois successives qu'un seuil de surveillance doit être atteint avant qu'une notification soit émise. La valeur par défaut est par exemple "0". Dans ce cas, la notification est alors immédiatement émise. La valeur "n" signifie que la notification est émise seulement après "n" plus une occurrences consécutives de dépassement de seuil. "n" est un entier positif.

Un objet "ntP100AlarmSeverity" est une chaîne qui contient le niveau de sévérité des notifications émises. La valeur peut être "tout va bien", "avertissement", "mineur", "majeur" or "critique". Ces valeurs correspondent à des niveaux de sévérité standardisée. Par défaut le niveau est fixé à "avertissement".

Un objet "ntP100AlarmOnce" est un indicateur. Si cet indicateur est positionné à "vrai", une notification dite notification d'alerte est émise seulement la première fois que le seuil est atteint et la surveillance de seuil n'est plus effectuée. En conséquence, aucune notification de fin d'alerte "tout va bien", définie ci-après, ne peut avoir lieu. Cet indicateur est utile pour conserver le niveau de sévérité du message d'alarme. La valeur par défaut est "faux" et implique que la surveillance de seuil reste active.

Un objet "NtP100AlarmClearValue" représente un second seuil de surveillance à atteindre pour émettre une notification dite notification de fin d'alerte après qu'un premier seuil ait été dépassé, premier seuil pour lequel une notification dite notification d'alerte a été émise. Les notifications émises par l'agent de performance sont soient des notifications d'alerte soient des notifications de fin d'alerte. Une valeur "sans" signifie qu'il n'y a pas de notification de fin d'alerte. La valeur par défaut est 'défaut', qui correspond à une valeur de fin d'alerte calculée. Par exemple, si le type de comparaison est ">", la valeur par défaut "défaut" est "ComparisonValue - ComparisonValue/10 - 1". Dans ce cas, si l'activité CPU descend en dessous de 80% et qu'une notification d'alerte d'une activité supérieure à 90% a déjà été émise, une notification de fin d'alerte est émise. Cet objet est utile pour ne pas conserver actives un trop grand nombre de notifications d'alertes.

Un objet "ntP100AlarmCheckPeriod" représente un entier qui permet d'émettre une notification même quand un seuil n'est pas atteint. La valeur "0" par défaut implique aucune notification, "1" implique une notification à chaque fois que le seuil n'est pas atteint, "n" implique une notification si le seuil n'a pas été atteint "n" fois consécutives. "n" est un entier positif.

Un objet "ntP100AlarmDate" définit la date de création de la surveillance de seuil par une requête SNMP SET.

L'agent de performance comporte un objet "ntP100AlarmEventLog" qui détermine le type de notification émise. La valeur par défaut est 'faux' et implique que la notification sera un message d'alarme "TRAP". La valeur 'vrai' implique que la notification sera une écriture dans l'historique du système. Une autre valeur implique que la notification sera une écriture dans un fichier historique portant le nom de ladite autre valeur.

La table d'alarme comporte également un objet supplémentaire, "ntP100AlarmProgram", qui contient le nom du programme qui doit être exécuté conformément à l'invention quand le seuil est atteint. L'objet « ntP100AlarmProgram » peut prendre trois valeurs. La première valeur 'sans' signifie ne pas appeler de programme en cas de détection de dépassement de seuil. La seconde valeur possible est le nom d'un programme à appeler en cas de détection de dépassement de seuil. Cette valeur peut être suivie par d'éventuels paramètres. Une troisième valeur, également en cas de détection de dépassement, peut être le nom de l'agent SNMP de performance (2i). Par exemple, ce sera l'agent décrit ci-dessus "ntPerformance". Cette valeur sera suivie par d'autres valeurs, donnant le nom d'une fonction de diagnostic interne à appeler et les éventuels paramètres de cette fonction ou des indexes d'une table de diagnostic. L'appel de cette fonction permet de déclencher des diagnostics sur un seuil de consommation globale.

La figure 2 représente une table de seuil (3i). Chaque ligne de la table constitue une entrée de la table qui comprend un ensemble de valeurs des objets (seuils, attributs, formules) de ladite table définissant une requête surveillance de seuil. La première colonne « AlarmID » de la table comprend, par exemple, les valeurs de l'objet "ntP100AlarmID" constituant les indexes des seuils de surveillance et les points d'entrée dans cette table. L'annexe 1 représente un exemple de table de seuil, constituée de requêtes de surveillance de seuil référencées de A1-1 à A1-7.

Considérons le premier exemple de réalisation de requête de surveillance de seuil de la table de seuil suivant :
- ntP100AlarmFormula 100 - ( DELTA ( ntP01TotalProcessorTime ) / ( DELTA ( ntP01CaptureTime ) * 100000 ) )
- ntP100AlarmComparisonType >
- ntP100AlarmComparisonValue 90
- ntP100AlarmProgram ntPerformance diag -gc -gm -gs -gn -pc 20-dt 4000 -pm 2000

Dans cet exemple, si l'agent SNMP de performance (2i) détecte un taux de consommation du ou des processeurs de l'ordinateur supérieur à 90 %, premièrement, une notification de détection de dépassement de seuil serait émise vers le gestionnaire SNMP ; deuxièmement, la fonction interne (5i) de diagnostic, " diag ", avec les paramètres -gc -gm -gs -gr -pc 20 -dt 4000 -pm 2000, serait appelée ; troisièmement, la fonction interne (5i) enverrait une notification vers le gestionnaire SNMP contenant ces différentes consommations, avec la date. Ensuite, suivant la valeur de l'objet SNMP "ntP100AlarmEventLog", la fonction pourrait écrire dans l'historique des événements du système, ou dans un fichier historique. L'ordre des paramètres et le nombre de paramètres de la fonction n'a aucune importance. A titre d'exemple, le premier paramètre " -gc " s'il est utilisé signifie que la fonction calculerait la consommation globale en processeur. Le second paramètre "-gm", s'il est utilisé, signifie que la fonction calculerait la consommation globale de la mémoire physique. Le troisième paramètre "-gs", s'il est utilisé, signifie qu'elle calculerait la consommation globale de la mémoire du cache. Le quatrième paramètre "-gn", s'il est utilisé, signifie qu'elle calculerait la consommation globale du réseau. Le cinquième paramètre "-pc 20", s'il est utilisé, signifie que cette fonction rechercherait tous les programmes qui utiliseraient un pourcentage paramétrable, par exemple plus de 20 %, du ou des processeurs. Le sixième paramètre de consommation totale dans un délai "-dt 4000", s'il est utilisé, signifie que cette fonction diagnostiquerait toutes ces consommations sur un délai paramétrable, par exemple de 4000 millisecondes. Le septième paramètre "-pm 2000", s'il est utilisé, signifie que la fonction rechercherait tous les programmes qui utiliseraient plus d'une valeur paramétrable, par exemple plus de 2000 kilo octets, de mémoire physique. La table de seuil peut contenir la destination "ntP100AlarmEventLog" des notifications émises par l'agent de performance. La nature de la notification (message d'alarme ou écriture dans un historique) est ainsi facilement paramétrable. L'objet "ntP100AlarmEventLog" peut être modifié afin que cette notification puisse être constituée d'un message d'alarme ou d'une écriture dans un historique.

Considérons le deuxième exemple de réalisation de requête de surveillance de seuil d'une table d'alarme suivant :
- ntP100AlarmFormula 100 - ( DELTA ( ntP01TotalProcessorTime ) / ( DELTA ( ntP01CaptureTime ) * 100000 ) )
- ntP100AlarmComparisonType >
- ntP100AlarmComparisonValue 90
- ntP100AlarmProgram ntPerformance diag 1 4 23 24 25

Ce deuxième exemple illustre un second mode de réalisation de l'invention. Ce deuxième exemple diffère du premier exemple de réalisation par le fait que les paramètres de la fonction interne ntPerformance 'diag', ne sont plus comme dans l'exemple précédent des arguments -gc -gm -gs -gn -pc appelées par la fonction diag, mais des points d'entrée dans une table de diagnostic "ntP101Diag", et plus précisément des indexes d'accès aux différents diagnostics possibles contenus dans une table de diagnostic (4i) gérable elle aussi par le gestionnaire SNMP. Cette table de diagnostic "ntP101Diag", accepte les formules avec un compteur multi-instancié et permet plus de souplesse en permettant son enrichissement par le protocole SNMP. Elle ne surveille pas les seuils contrairement à la table de seuil (3i) "ntP100Alarm", mais établit des diagnostics relatifs au dépassement de seuil. La table de diagnostic interroge les compteurs une seule fois après dépassement du seuil de surveillance. La figure 3 représente un exemple de table de diagnostic (4i) selon l'invention. La structure de cette table de diagnostic est similaire à celle de la table de seuil (3i). Chaque ligne de la table de diagnostic constitue un point d'entrée de la table et comprend un ensemble de valeurs des objets de ladite table définissant une requête de diagnostic de seuil.

Considérons l'exemple de requête de diagnostic d'index 23 (point d'entrée 23, ligne 23) de la table de diagnostic suivant :
- ntP101Diagformula ( DELTA ( ntP08ProcessTimePID:* ) / ( DELTA ( ntP08CaptureTime ) * 100000 ) )
- ntP101DiagComparisonType >
- ntP101DiagComparisonValue 10
- ntP101 DiagPeriod 4000
- ntP101DiagSeverity avertissement
- ntP101DiagID 23

Les 6 champs possibles de cette table de diagnostic (4i) ont la même signification que leurs équivalents dans la table de seuil. La période,"ntP101DiagPeriod", est en millisecondes.

Cet exemple diagnostique quels sont les programmes actifs ou processus qui ont consommé chacun plus de 10 % du temps de tous les processeurs. Le caractère "*" désigne dans cet exemple tous les programmes actifs ou processus et est appelée la star convention. Un mécanisme de cache pour la star convention est ici inutile car les diagnostics sont appelés de manière ponctuelle. Ceci implique aussi que la période de diagnostic peut être courte. La surveillance n'a lieu qu'au niveau des ressources globales. Par contre les diagnostics peuvent être lancés sur des unités d'exécution ("threads") différentes. Si l'ordinateur possède plusieurs processeurs, les différentes unités d'exécution "threads" peuvent être exécutées en parallèle. De façon similaire à la table de seuil, la table de diagnostic peut contenir la destination "ntP101DiagEventLog" des notifications émises par l'agent de performance. Cette notification peut être constituée d'un message d'alarme ou d'une écriture dans un historique.

La surveillance des performances s'effectue par des unités d'exécution qui sont lancées pour chaque surveillance ou activité à surveiller. A chaque requête de seuil et à chaque requête de diagnostic de seuil dépassé, une unité d'exécution est associée. Cette unité d'exécution 'thread' peut être créée, modifiée ou suspendue. Il existe un nombre maximum d'unité d'exécution d'une part pour la surveillance de seuil et d'autre part pour le diagnostic de seuil. Une fonction de création d'une unité d'exécution 'thread' teste si le nombre maximum d'unité d'exécution est atteint et lance l'unité d'exécution. Une requête de surveillance de seuil est modélisée dans une structure qui définit les valeurs de chaque objet de la table de seuil. Cette structure, correspondant à un point d'entrée (une ligne) de la table de seuil, contient (figure 2):

| | |
|---|---|
| « -son identificateur | 'AlarmID' |
| -sa formule | 'AlarmFormula' |
| -sa période | AlarmPeriod' |
| -son type de comparaison | 'AlarmComparisonType' |
| -sa valeur à comparer | 'AlarmComparisonValue' |
| -son nombre d'occurrence avant alerte | 'AlarmRepeat' |
| -sa sévérité | 'AlarmSeverity' |
| -son nombre d'alarmes possibles | 'AlarmOnce' |
| -la destination | 'AlarmEventLog' |
| -son programme à appeler | 'AlarmProgram' ('Diag') |
| -sa date | 'AlarmDate' |
| -sa valeur de fin d'alerte | 'AlarmClearValue' |
| -sa période d'activation | 'AlarmCheckPeriod' |
| >> | |

De la manière identique, une requête de diagnostic de seuil est modélisée dans une structure correspondant à un point d'entrée (une ligne) de la table de diagnostic qui contient :

| | |
|---|---|
| « -son identificateur | 'DiaglD' |
| -sa formule | 'DiagFormula' |
| -sa période | 'DiagPeriod' |
| -son type de comparaison | 'DiagComparisonType' |
| -sa valeur à comparer | 'DiagComparisonValue' |
| -sa sévérité | 'DiagSeverity' |
| -sa destination | 'DiagEventLog' |
| -sa date | 'DiagDate' » |

Deux structures identiques, internes à une unité d'exécution contiennent les valeurs de compteurs définis dans les formules et mémorisés, la première valeur à un temps donné, la seconde valeur à un temps ultérieur. La différence des deux temps correspond à la période. Les compteurs délivrent des valeurs à des temps donnés ou dans le cas de valeurs trop importantes, des différences de valeurs calculées au bout de ladite période. Ces structures indiquent, premièrement si la différence des compteurs doit être calculée et deuxièmement sur quelle instance de compteur de surveillance le calcul doit être réalisé, dans le cas d'un compteur à multiples instances. En référence à la figure 4, une structure interne (6) d'une unité d'exécution d'une surveillance de seuil mémorise pour chaque compteur (Cs1, Cs2, ..., Csi, ..., Csn), un nom (61), une valeur (62) (correspondant à une valeur donnée à un instant déterminé ou à une différence de valeurs calculées sur la période), un attribut (63) de calcul de différence déterminant selon sa valeur si le calcul de la différence doit être effectué ou non et un index (64) définissant l'objet physique ou logique que le compteur surveille, par exemple le disque 1. En référence à la figure 5, une structure interne (7) d'une unité d'exécution de diagnostic de seuil comporte un nom (71), une valeur (72), et un attribut (73) de calcul de différence des compteurs (Cd1, Cd2, ..., Cdi, ..., Cdn). Les différences des compteurs sont calculés avant le calcul de la formule.

La première tâche d'une unité d'exécution de surveillance de seuil, correspondant à la requête de surveillance de seuil (correspondant à un point d'entrée dans la table de surveillance) est d'analyser sa formule "AlarmFormula", c'est-à-dire de préparer ses deux structures internes (6) à l'aide de sa formule en mémorisant tous les compteurs (Cs1,..., Csi ..., Csn) qu'elle doit gérer. La deuxième tâche de l'unité d'exécution est d'obtenir, à un temps donné, les valeurs des compteurs de la première structure interne afin d'initialiser sa surveillance. La troisième et dernière tâche de l'unité d'exécution consiste en une boucle infinie de surveillance. Cette boucle peut être divisée en trois parties. La première partie de la boucle consiste à attendre pendant une durée correspondant à sa périodicité (AlarmPeriod'), puis à obtenir à ce nouveau temps donné les valeurs (valeurs ou différences de valeur) des compteurs de surveillance de la seconde structure interne. La seconde partie de la boucle consiste à tester, par un calcul à l'aide des deux structures internes, si le seuil a été atteint et son nombre d'occurrence (AlarmRepeat) avant l'émission d'une notification d'alerte. Si c'est le cas, la notification est émise avec sa sévérité vers sa destination et son programme à appeler est exécuté. Si le programme à appeler est une série de diagnostic interne (Diag), une unité d'exécution par diagnostic est créée. Si son nombre d'alarme possible est 1, alors l'unité d'exécution de surveillance de seuil est arrêtée. Le compteur associé à sa période de vérification 'CheckPeriod' est remis à zéro. Si le seuil n'a pas été atteint, deux cas se présentent. Premier cas, si une notification a été émise, et si sa valeur de fin d'alerte est atteinte, une notification avec sa sévérité de fin d'alerte est émise. Second cas, si sa période de vérification est atteinte, la notification avec sa sévérité de vérification est émise. La troisième et dernière partie de la boucle consiste à remplacer les anciennes valeurs des compteurs de surveillance de la première structure interne par ceux de la seconde.

La première tache d'une unité d'exécution de diagnostic, correspondant à la requête de diagnostic, est d'analyser sa formule (DiagFormula) c'est-à-dire de préparer ses deux structures internes (7) à l'aide de sa formule. Il doit aussi rechercher si à un compteur de diagnostic a été associée la chaîne de caractères : *. Cette chaîne indique qu'il doit rechercher le nombre d'occurrences de ce compteur. La deuxième et dernière tache d'une unité d'exécution de diagnostic consiste en une boucle finie de surveillance. Elle est finie sur le nombre d'occurrences trouvé ci-dessus. La première partie de la boucle consiste à trouver, à un temps donné, les valeurs de compteur de la première structure interne, afin d'initialiser le diagnostic. La seconde partie de la boucle consiste à attendre pendant une durée correspondant à sa périodicité, puis à obtenir sur ce nouveau temps donné les valeurs des compteurs de surveillance de la seconde structure interne. La troisième partie de la boucle consiste à tester si le seuil a été atteint, par un calcul à l'aide des deux structures. L'unité d'exécution calcule la différence entre les deux compteurs et calcule la formule avec cette différence. Si le seuil est atteint, la notification de diagnostic avec sa sévérité est émise.

La table de seuil et la table de diagnostic peuvent être entièrement gérées à partir de requêtes SNMP SET émises par le gestionnaire SNMP. Les tables sont conservées dans des fichiers qui sont relus au lancement de l'agent de performance. Des fichiers permettant de surveiller de la manière la plus économique tout en ayant des diagnostics les plus précis possibles sont livrés par défaut.

D'autres modifications à la portée de l'homme de métier font également partie de l'esprit de l'invention.

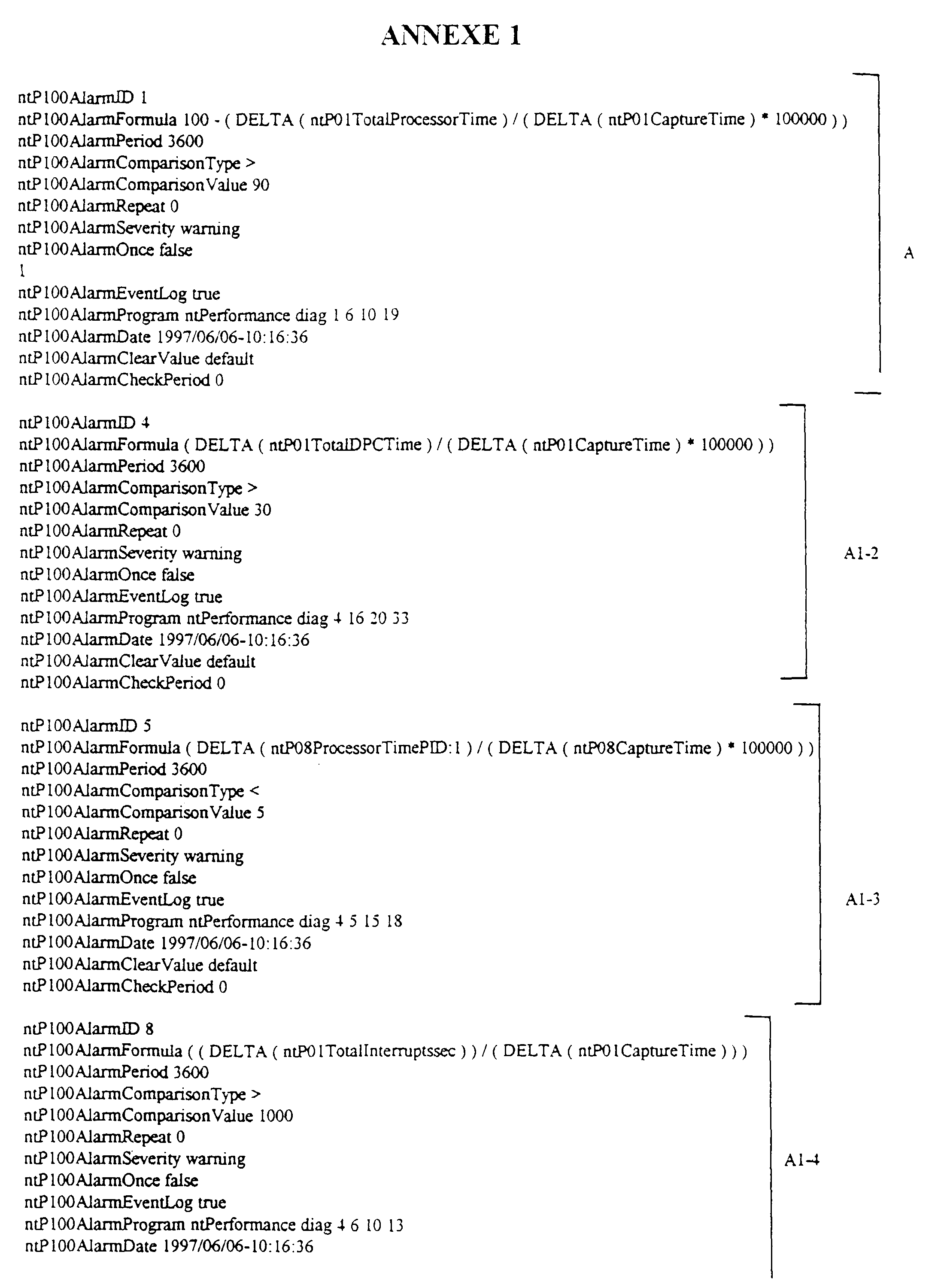

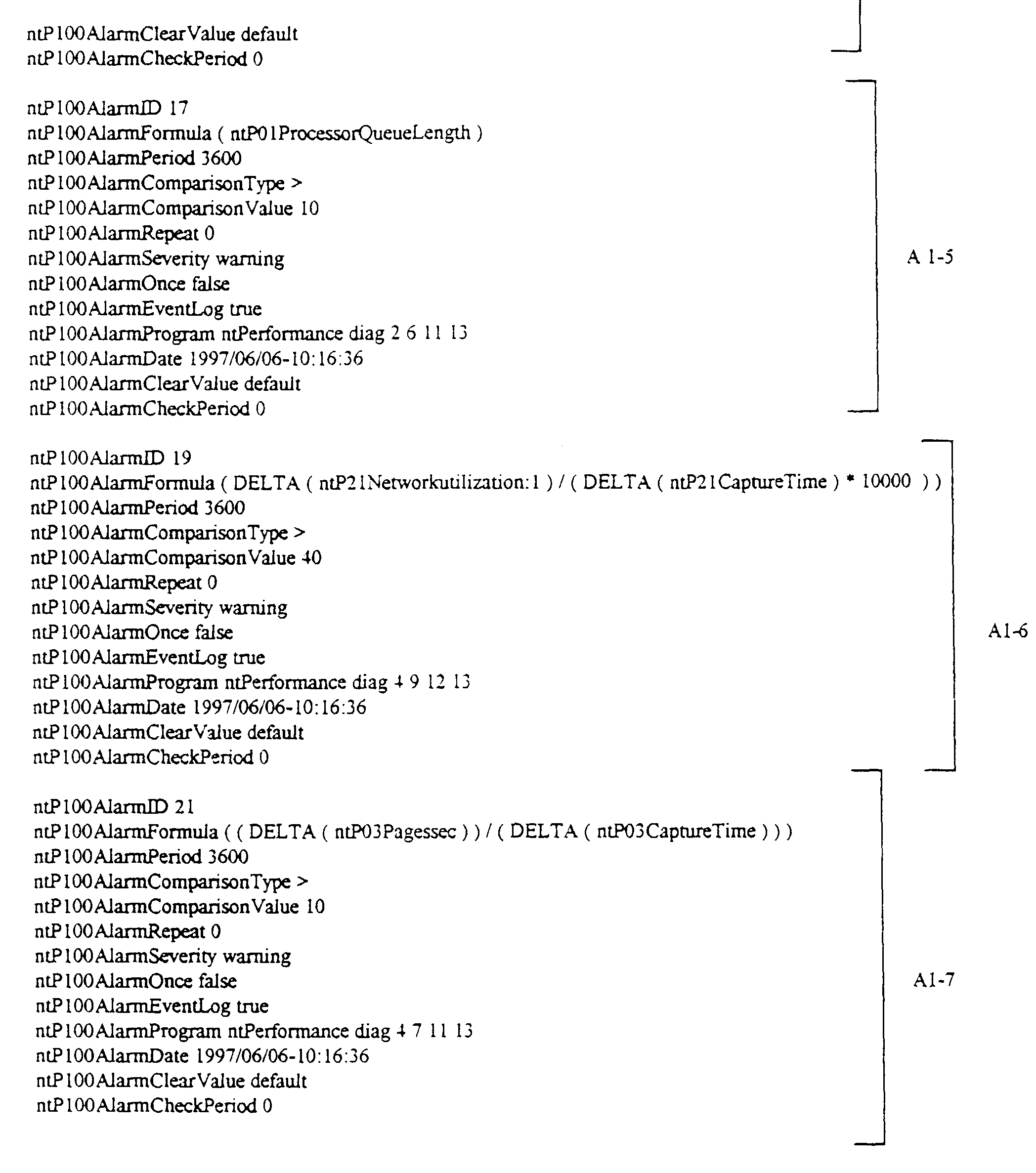

## Revendications

1. Dispositif permettant de surveiller l'activité d'au moins un ordinateur distant (OD1, ..., ODi, ..., ODn) à partir d'un gestionnaire SNMP (1) installé sur un ordinateur local (OL) à travers un réseau (10), caractérisé en ce qu'il comprend un agent de performance (2i) installé dans chaque ordinateur distant (ODi) apte à détecter le dépassement d'un seuil de consommation d'une ou plusieurs ressources de l'ordinateur distant (ODi) à partir d'une fonction de seuil (8i), gérable par le gestionnaire SNMP (1) de l'ordinateur local (OL), fonction qui permet de paramétrer l'agent de performance en lui indiquant des seuils déterminés pour chaque activité surveillée, et d'émettre une notification de dépassement de seuil et en ce que l'agent de performance (2i) exécute au moins un diagnostic lorsqu'un seuil a été dépassé en appelant une fonction de diagnostic (5i) interne à l'agent SNMP de performance (2i), fonction gérable par le gestionnaire SNMP (1) de l'ordinateur local (OL), et émet une notification de diagnostic comprenant une information de diagnostic.

2. Dispositif selon la revendication 1, caractérisé en ce que les paramètres de la fonction interne de seuil et de diagnostic sont des indexes d'accès à une table respectivement de seuil (3i) et de diagnostic (4i) de l'agent de performance (2i).

3. Dispositif selon la revendication 2, caractérisé en ce que la table de seuil (3i) est constituée des objets suivants : un identificateur, une formule, une période, un type de comparaison, une valeur à comparer (un seuil), un nombre d'occurrence avant alerte, une sévérité, un nombre d'alarmes possibles, une fonction interne de diagnostic à appeler en cas de dépassement de seuil, une date, une valeur de fin d'alerte, une période d'activation.

4. Dispositif selon la revendication 2, caractérisé en ce que la table de diagnostic (4i) est constituée des objets suivants : un identificateur, une formule, une période, un type de comparaison, une valeur à comparer, une sévérité, une date.

5. Dispositif selon l'une des revendications 2 à 4, caractérisé en ce que la table de seuil (3i) et la table de diagnostic (4i) comportent un objet définissant la destination de la notification de dépassement de seuil et un objet définissant la destination de la notification de diagnostic.

6. Dispositif selon l'une des revendications précédentes, caractérisé en ce que la notification est constituée d'un message d'alarme (TRAP) ou d'une écriture dans un historique de son propre programme ou dans un historique global du système.

7. Dispositif selon l'une des revendications précédentes, caractérisé en ce que chaque activité surveillée est effectuée par une unité d'exécution qui déclenche une autre unité d'exécution pour chaque diagnostic.

8. Dispositif selon la revendication 1, caractérisé en ce que la fonction de diagnostic (5i) comporte quatre paramètres "-gc, -gm, -gs, -gn", permettant de déclencher respectivement le calcul de la consommation globale en processeur, de la mémoire physique, de la mémoire du cache, du réseau, un cinquième paramètre "-pc 20", permettant de déclencher la recherche de tous les programmes qui utilisent plus d'un pourcentage paramétrable du ou des processeurs, un sixième paramètre "-dt 4000" permettant de déclencher le calcul ces consommations sur un délai paramétrable en millième de secondes, et un septième paramètre "-pm 2000" permettant de déclencher la recherche de tous les programmes qui utilisent plus d'un nombre paramétrable de kilo octets de mémoire physique.

9. Procédé d'optimisation de surveillance de seuils de consommation paramétrables sur un ordinateur distant (OD) caractérisé en ce qu'il comporte les étapes suivantes :
- une étape de surveillance d'un seuil par une fonction interne de seuil (8i);
- une émission, par l'ordinateur distant (OD) sur lequel l'agent de performance (2i) effectue la surveillance, d'une notification de dépassement de seuil;
- une étape d'exécution de diagnostics par une fonction de diagnostic interne (5i);
- une étape d'émission d'une notification contenant le diagnostic associé au dépassement de seuil.

10. Procédé d'optimisation de surveillance selon la revendication 9, caractérisé en ce que l'étape de surveillance de seuil comporte trois tâches, une première d'analyse d'une formule de la fonction de seuil, une deuxième d'obtention à un temps donné des valeurs (62) de compteurs d'une première structure interne (6) et une troisième d'exécution d'une boucle infinie de surveillance.

11. Procédé d'optimisation de surveillance selon la revendication 10, caractérisé en ce que la boucle infinie de surveillance comprend une première partie consistant à attendre sur une période et obtenir au bout de la période les valeurs des compteurs d'une seconde structure, une deuxième partie consistant à tester à l'aide des deux structures internes si un seuil de la fonction de seuil a été atteint et si le nombre d'occurrences est atteint, et une troisième partie consistant à remplacer les valeurs des compteurs de la première structure interne par ceux de la seconde.

12. Procédé d'optimisation de surveillance selon la revendication 9, caractérisé en ce que l'exécution d'un diagnostic comporte l'analyse d'une formule en préparant les valeurs de compteurs (Cd1, Cdn) de diagnostic de deux structures internes (7), la recherche du nombre d'occurrence des compteurs de diagnostic et l'exécution une boucle de surveillance pour chaque occurrence.

13. Procédé d'optimisation de surveillance selon la revendication 12, caractérisé en ce que, la boucle comprend une première partie consistant à trouver, à un temps donné, la valeur des compteurs de la première structure interne, afin d'initialiser le diagnostic, une deuxième partie consistant à attendre sur sa périodicité, puis à obtenir sur ce nouveau temps donné les valeurs des compteurs de surveillance de la seconde structure interne et une troisième partie consistant à tester à l'aide des deux structures si le seuil a été atteint.
